(19) **Europäisches Patentamt / European Patent Office / Office européen des brevets**

(11) **EP 1 965 971 B1**

(12) **EUROPEAN PATENT SPECIFICATION**

(45) Date of publication and mention
of the grant of the patent:
**20.08.2014 Bulletin 2014/34**

(51) Int Cl.:
**B32B 3/10** *(2006.01)*    **C08F 10/02** *(2006.01)*

(21) Application number: **06826520.6**

(22) Date of filing: **24.10.2006**

(86) International application number:
**PCT/US2006/041390**

(87) International publication number:
**WO 2007/050559 (03.05.2007 Gazette 2007/18)**

(54) **FILMS PACKAGES PREPARED THEREFROM, AND METHODS OF USE**

FOLIEN, DARAUS HERGESTELLTE VERPACKUNGEN UND VERWENDUNGSVERFAHREN

FILMS, EMBALLAGES PRODUITS A PARTIR DE CEUX-CI, ET LEURS PROCEDES D'UTILISATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.10.2005 US 729705 P**

(43) Date of publication of application:
**10.09.2008 Bulletin 2008/37**

(73) Proprietor: **Dow Global Technologies LLC
Midland, MI 48674 (US)**

(72) Inventors:
• **WIKER, Nathan, J.
Houston, TX 77089 (US)**
• **SAAVEDRA, Jose, V.
Lake Jackson, TX 77566 (US)**

(74) Representative: **Beck Greener
Fulwood House
12 Fulwood Place
London WC1V 6HR (GB)**

(56) References cited:
**WO-A-2004/106392     DE-U1-202004 019 948
GB-A- 1 265 547**

• **DATABASE WPI Week 200577 Derwent Publications Ltd., London, GB; AN 2005-752967 XP002451847 & JP 2005 290366 A (TORAY IND INC) 20 October 2005 (2005-10-20)**

## Description

BACKGROUND OF INVENTION

The invention relates to perforated films comprising at least one layer, and to packages prepared from the same. Such films and packages contain a combination of perforation sizes and perforation densities that allows for effective air removal and improved moisture resistance. The inventive packages particularly allow for effective air removal during a pressurized filling of fine powder substances. The invention also relates to methods of forming such perforated films and packages, and to methods of filling such packages. In addition, the invention relates to perforated films that are strong enough to withstand the heat of hot-filling and the substantial loads and the rough surfaces associated with routine packaging and distribution processes.

In the powder packaging business, it is critical to have breathable packages (bags), as the packages are filled by pressurized air that fluidizes the powder particles. Entrained air must be removed from the package, or the internal bag pressure will increase, and the bag will rupture. The entrained air must be removed from the package in a controlled manner, to allow for maximum capturing of the fluidized powder. Currently, entrained air is removed by perforations in plastic bags.

Optimal packages should keep the powder from leaking out; however, the retainment of the powder must be balanced with the need to allow air to escape during the filling process. As discussed above, one method of air escape is to perforate the package. However, the size and number of perforations in the package will dictate the amount of powder that can leach out of the package.

U.S. Patent 3,085,608 discloses a polyethylene sheet or bag, wherein the polyethylene material is perforated in a more or less regulated pattern with a myriad of perforations, spaced a predetermined distance. The bag is permeable to air under slight pressure above or below atmospheric pressure-and is substantially impermeable to moisture or water. This reference discloses perforations having an average diameter of between 0.020 and 0.045 inches.

U.S. Patent 4,672,684 discloses a thermoplastic shipping bag having a thermoplastic inner ply, comprising a mesh which permits the packaging of finely powdered materials, without releasing unacceptable levels of powders to the atmosphere during or after filling. This reference discloses an inner mesh with 0.1 to 1.0 mm pore sizes.

European Patent Application No. 0391661A discloses a layered sheet material formed from a first layer and a second layer. The first layer has a predetermined density/m$^2$ micropores of a size in the range of 0.1 to 0.4 mm, which provides this layer with a controlled degree of porosity, whereby the layer is permeable to air through said pores. The second layer has a fibrous air-permeable construction, and is substantially impervious to liquid and particles.

U.S. Patent 4,743,123 discloses a plastic bag of polyolefin material, such as a polyethylene, for packaging materials, and comprising particles of less than 50 $\mu$m, and a closed bag containing such materials, and a foil material for such a bag. The foil wall of the bag is provided with venting apertures with smooth edges, obtained by laser radiation, having a maximum size of 50-100 $\mu$m. The distance between the venting perforations is such that the tensile strength of the foil is substantially the same as the tensile strength of the similar non-perforated foil. In a low density polyethylene foil of a thickness of 130-190 $\mu$m, the distance between the perforations of 80 $\mu$m is more than 20 mm, in a linear low density polyethylene foil of about 50-110 $\mu$m the perforation distance is at least 5 mm. The bag may consist of two perforated foil layers, the perforations being staggered with respect to each other.

U.S. Patent 4,332,845 discloses a bag, wherein at least part of the material constituting the bag, in which an oxygen absorbent is sealed, is composed of a laminated sheet, in which a gas permeable sheet is laminated to one or both sides of a microporous film to provide a lamination the two outside layers. The two outer layers have different softening points, and the layer having a lower softening point constitutes the inner surface of the bag. The microporous film is disclosed as having a plurity of fine openings, and as being gas-permeable, and water impermeable, when there is no difference between pressure outside the bag and pressure in the bag. The size of the openings is preferably from 0.01 to 50 microns, and the distance across the short axis is less than 2 microns.

GB 1 265 547 discloses a process and apparatus for packaging particulate or pulverulent products in containers made of plastic sheeting. This reference discloses a container made of perforated oriented plastic sheeting, wherein the perforations have a diameter less than the mean particle size of the packaged product. This reference discloses a bag produced from a tube of high pressure polyethylene sheeting with perforations of 0.02 mm on a given area of the sheeting.

Additional film and packaging applications are disclosed in U.S Patent 5,493,844; U.S Patent 4,672,684; U.S Patent 4,456,570; U.S Patent 4,579,154; U.S Publication No. 2003/0085213; U.S Patent 5,427,807; U.S Patent 6,086,967; U.S Patent 5,389,448; U.S Patent 6,579,607; U.S. Patent 5,139,855; European Patent Application No. EP0060599; European Patent Application No. 0500931A1; International Publication No. WO 03/074594; and International Publication No. WO 03/095197.

However, these references do not provide for flexible packages prepared from breathable films, which are cost-effective to produce and have good mechanical properties, and which can be effectively filled under pressure with a powdery material, and will effectively allow for the release of entrained air, with reduced powder leakage or dust.

Thus, there is a need for breathable films which are cost-effective to produce, preferably on existing packaging lines, and have good mechanical properties. There is a further need for flexible packages prepared from such films that can be effectively filled under pressure with a powdery material, and will effectively allow for the release of entrained air. As discussed above, the entrained air must be removed in a controlled manner, to allow maximum capturing of the fluidized powder and the reduction of powder (dust) on the exterior surface of the bag. Thus, there is a need to minimize dust, while allowing a fast and efficient release of entrained air during a filling process. The package must also maintain a good moisture barrier and good structural integrity, especially at elevated temperatures. In a typical powder filling process, the heat generated during the filling of a bag can increase the bag temperature as high as 100°C.

There is also a need to develop films with minimal surface defects, printable surfaces and good structural integrity. There is a further need to develop a breathable film which does not require a high filler loading. At least some of these needs and others have been satisfied by the following invention.

SUMMARY OF THE INVENTION

The invention provides a perforated film, comprising at least one layer, and wherein the at least one layer comprises perforations that are individually of a size less than, or equal to, 90 microns ($\mu$m), and wherein the ratio of the total perforation area to the total film surface area is from 400,000 to 2,000,000 square micron per square inch of film $((\mu m)^2/(in)^2)$.

In addition, the invention provides a method for forming a perforated film comprising at least one layer, said method comprising:

a) selecting a thermoplastic polymer or polymer blend suitable for the at least one layer;
b) forming a film, such as a blown or cast film, from the thermoplastic polymer or polymer blend;
c) perforating said film to form a perforated film; and

wherein the at least one layer comprises perforations that are individually of a size less than, or equal to, 90 microns ($\mu$m), and wherein the ratio of the total perforation area to the total film surface area is from 400,000 to 2,000,000 square micron per square inch of film $((\mu m)^2/(in)^2)$.

The invention also provides a method of filling a package with powdery goods, said method comprising: adding the powdered goods, using a pressurized gas to a package of suitable capacity, to form a filled package, and wherein the package is formed from a perforated film, comprising at least one layer, and wherein the at least one layer comprises perforations that are individually of a size less than, or equal to, 100 microns ($\mu$m), and wherein the ratio of the total perforation area to the total film surface area is from 400,000 to 2,000,000 square micron per square inch of film $((\mu LM)^2/(in)^2)$.

BRIEF DESCRIPTION OF THE DRAWINGS

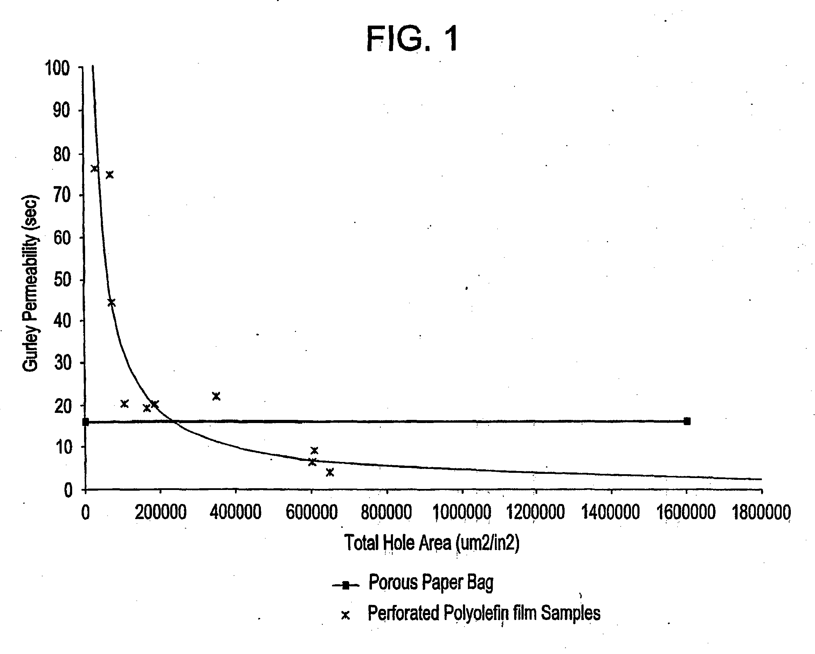

Figure 1 is a plot of Gurley Permeability (sec) versus the total perforation area $(\mu m)^2/(in)^2$ of perforated polyolefin films, in comparison with a porous paper bag.
Figure 2 depicts alternative perforation patterns.
Figure 3 is a schematic of a valve bag (1) with a uniform (evenly spaced) placement of perforations (perforation noted as (2)), and an opening (3).
Figure 4 is a schematic of a valve bag (1) with several different perforation densities (perforation noted as (2)), and an opening (3).
Figure 5 is a schematic of a valve bag (1) with a higher perforation density (perforation noted as (2)) in a side surface area (5), relative to a front surface area (4), and an opening (3).

DETAILED DESCRIPTION OF THE INVENTION

The invention provides for perforated films and packages that have a good balance of permeability, moisture resistance and mechanical properties. Perforated packages formed the inventive films also sufficiently allow for the release of entrained air during a pressurized powder filling process, while reducing the amount of powder (dust) on the exterior surface of the bag. In particular, the invention provides a perforated film, comprising at least one layer, and wherein the at least one layer comprises perforations that are individually of a size less than, or equal to, 90 microns ($\mu$m), and wherein the ratio of the total perforation area to the total film surface area is from 400,000 to 2,000,000 square micron per square inch of film $((\mu m)^2/(in)^2)$. In one aspect of the invention, the perforations are of equal size. In yet another aspect of the invention, perforations range from 10 microns to 100 microns. In another aspect, the film comprises at least three layers, and wherein at least one inner layer is an open and/or reclosable porous layer.

In another aspect of the invention, the at least one film layer is formed from a composition that comprises at least one thermoplastic polymer. In another aspect of the invention, the thermoplastic polymer is a polyolefin. In another aspect of the invention, the composition comprises 50 weight percent or more of an ethylene-based homopolymer or interpolymer. In yet a further aspect of the invention, the composition comprises 40 weight percent or less of a propylene-based homopolymer or interpolymer. The polymer molecules of the propylene-based homopolymer of interpolymer may be coupled.

In yet another aspect of the invention, the film has a Gurley Permeability of less than 50 sec per 100 cc air, and more preferably less than 30 sec per 100 cc air. In another aspect of the invention, the film comprises from 60 to 1000 perforations per square inch of film.

The invention also provides a package prepared from an inventive film as described herein. In one aspect, the package contains two or more seams and contains perforations in one or more designated areas within the surface of the package.

The invention also provides for additional embodiments of the films and/or packages described herein, and for combinations of these embodiments.

In addition, the invention provides a method for forming a perforated film comprising at least one layer, said method comprising:

a) selecting a thermoplastic polymer or polymer blend suitable for the at least one layer;
b) forming a film, such as a blown or cast film, from the thermoplastic polymer or polymer blend;
c) perforating said film to form a perforated film; and

wherein the at least one layer comprises perforations that are individually of a size less than, or equal to, 100 microns ($\mu$m), and wherein the ratio of the total perforation area to the total film surface area is from 400,000 to 2,000,000 square micron per square inch of film $((\mu m)^2/(in)^2)$. In one embodiment, the perforations are localized in one or more designated areas of the film. The invention also provides for additional embodiments of this method as described herein, and for combinations of these embodiments.

The invention also provides a method of filling a package with powdery goods, said method comprising: adding the powdered goods, using a pressurized gas, typically air, to a package of suitable capacity, to form a filled package, and wherein the package is formed from a perforated film, comprising at least one layer, and wherein the at least one layer comprises perforations that are individually of a size less than, or equal to, 100 microns ($\mu$m), and wherein the ratio of the total perforation area to the total film surface area is from 400,000 to 2,000,000 square micron per square inch of film $((\mu m)^2/(in)^2)$. The invention also provides for additional embodiments of this method as described herein, and for combinations of these embodiments.

The inventive perforated films have a better balance of permeability, moisture resistance and mechanical properties, compared to comparative films that fall outside the perforation sizes, areas and/or densities of the inventive films. Packages formed from such films can be filled with fine powdery goods, under pressure, and have good permeability to entrained air formed during the filling process. During the release of air, such packages show less powder (dusting) on the exterior surface of the package compared to packages prepared from comparative films. As discussed, such packages also have excellent moisture barrier properties and excellent mechanical properties, such as Elmendorf Tear, 2% Secant Modulus, puncture resistance and Dart Impact.

As discussed above, the invention provides for breathable films and flexible packages prepared from such films. The flexible packages can be filled effectively, under pressurized conditions (e.g., pressurized air), with powdery materials. A package of the invention is based on a perforated film, containing at least one layer (or ply). In one embodiment the perforated film contains only one layer or ply.

Packages formed from the films of the invention can hold powdery goods of various sizes. In one embodiment, the particle size of such goods may range from 1 $\mu$m to 100 $\mu$m. The particle can be any shape, such as spherically shaped or irregularly shaped and non-uniform.

The films of the invention can be used for the packaging of any type of goods, including particulate, powder, granular and bulk goods, and, in particular, for the packaging of moisture sensitive goods, and moisture sensitive powdery goods. A package formed from a film of the invention is especially useful in the packaging of powdery goods, such as cement, lime, talc, talcum powder, polyvinyl chloride, gypsum, cocoa, corn flour, flour and powdery sugar.

A package prepared from an inventive film can be thermally or mechanically treated with additional processing steps, as required for the particular packaging needs. However, the invention provides a package that can be used in routine powder packaging process steps, without the need for an additional processing step, or the need for an alteration of a processing step.

The films of the invention may be prepared without the need for a large amount of filler, such as calcium carbonate. Filler components are typically present in amounts of 50 weight percent or more. Fillers are often used in a film composition to produce pores within the final film. Typically, a film is cast from such a film composition, and the cast film is then stretched to form holes around agglomerated of filler particles. In one embodiment, the inventive film does not contain 50 weight percent of more of a filler. In another embodiment, the inventive film does not contain 25 weight percent of more of a filler. In another embodiment, the film does not contain a filler component.

The films of the invention are perforated, typically, by a mechanical means, including, but not limited to, pinned rollers or plated pins; or by a laser treatment.

Overview of Films/ Packaging

The perforation sizes useful in the films of the invention are less than 100 microns ($\mu$m), preferably less than 90 microns, and more preferably less than 80 microns. In one embodiment, the perforation size is from 10 microns to 100 microns, preferably from 30 microns to 100 microns, more preferably from 50 microns to 100 microns, and even more preferably from 60 microns to 100 microns. All individual values and subranges from 10 microns to 100 microns are included herein and disclosed herein. In another embodiment, the perforation size is from 60 microns to 90 microns. In another embodiment, the perforation size is from 10 microns to 40 microns. In another embodiment, the perforation size is greater than, or equal to 10 microns, preferably greater than, or equal to 20 microns, and more preferably greater than, or equal to, 30 microns. In another embodiment, the perforation size is less than, or equal to 100 microns, preferably less than, or equal to 90 microns, and more preferably less than, or equal to, 80 microns.

The perforation size is typically an average diameter, if the hole shape is circular; or if the shape is not circular, an average equivalent diameter. For example, the perforation size of an elliptical hole would be the average of its two diameters.

The perforations within the film layers may be of any size or shape, including, but not limited to, holes of varying degrees of circularity, various triangular shapes, various rectangular shapes and other polygon shapes, irregular shapes and slits. In one embodiment of the invention, the layers (or plies) of the film have perforations of the same size or size gradient. The size of the perforations will vary, depending on the size of the contained goods. In another embodiment, the perforations have the same size. In a preferred embodiment, the perforations are circular in shape.

The films of the invention are perforated, typically, by a mechanical means, including, but not limited to, pinned rollers or plated pins; or by a laser treatment. In one embodiment, the perforations are formed from both sides of a film, such as a blown film, or from both sides of a package. In another embodiment, craters resulting from the perforations are located on the exterior surface of a package formed from an inventive film.

In another embodiment, the ratio of the total perforation area to the total film surface area is from 400,000 square micron per square inch of film (($\mu$m)$^2$/(in)$^2$) to 2,000,000 ($\mu$m)$^2$/(in)$^2$, preferably from 500,000 ($\mu$m)$^2$/(in)$^2$ to 1,000,000 ($\mu$m)$^2$/(in)$^2$, and more preferably from 600,000 ($\mu$m)$^2$/(in)$^2$ to 800,000 ($\mu$m)$^2$/(in)$^2$. All individual values and subranges from 400,000 ($\mu$m)$^2$/(in)$^2$ to 2,000,000 ($\mu$m)$^2$/(in)$^2$ are included herein and disclosed herein. In another embodiment, the ratio of the total perforation area to the total film surface area is greater than, or equal to 400,000 ($\mu$m)$^2$/(in)$^2$), preferably greater than, or equal to 500,000 ($\mu$m)$^2$/(in)$^2$),, and more preferably greater than, or equal to, 600,000 ($\mu$m)$^2$/(in)$^2$). In another embodiment, the total perforation area to the total film surface area is less than, or equal to 2,000,000 ($\mu$m)$^2$/(in)$^2$, preferably less than, or equal to 1,900,000 ($\mu$m)$^2$/(in)$^2$, and more preferably less than, or equal to, 1,800,000 ($\mu$m)$^2$/(in)$^2$.

In another embodiment, the perforation density is from 40 to 1500 perforations per square inch, preferably from 60 to 1,000 perforations per square inch, more preferably from 65 to 750 perforations per square inch, and even more preferably from 100 to 500 perforations per square inch of film.

In another embodiment, the Gurley Permeability of the film is less than 50, preferably less than 30, and more preferably less than 20 seconds per 100 cc of air. In another embodiment, the Gurley Permeability of the film is from 2 to 50 seconds per 100 cc of air, more preferably from 5 to 40 seconds per 100 cc of air, and even more preferably from 10 to 30 seconds per 100 cc air. All individual values and subranges from 2 to 50 seconds per 100 cc of air are included herein and disclosed herein.

In another embodiment, the air permeability of a package prepared from an inventive film is at least 30 m$^3$ per hour, more preferably at least 50 m$^3$ per hour, and most preferably at least 100 m$^3$ per hour. In another embodiment, an air permeability of at least 200 m$^3$ per hour is achieved.

The films of the invention typically, may have a thickness of from 25 $\mu$m (microns) to 1000 $\mu$m, preferably from 40 $\mu$m to 600 $\mu$m, more preferably from 50 $\mu$m to 400 $\mu$m. All individual values and subranges from 25 $\mu$m to 1000 $\mu$m are included herein and disclosed herein. In another embodiment, the film thickness is greater than, or equal to 25 $\mu$m, preferably greater than, or equal to 30 $\mu$m, and more preferably greater than, or equal to, 45 $\mu$m. In another embodiment, the film thickness is less than, or equal to 1000 $\mu$m, preferably less than, or equal to 800 $\mu$m, and more preferably less than, or equal to, 600 $\mu$m. Films may also have a thickness greater than 1000 $\mu$m.

In another embodiment, the inventive films have a 2% Secant Modulus (MD and/or CD) of at least 50,000 psi.

In yet another embodiment, the inventive films have an Elmendorf Tear (MD and/or CD) of at least 40 grams per mil of film thickness, and more preferably at least 70 grams per mil of film thickness.

The invention provides for a package formed from an inventive film. The invention also provides for a package comprising at least one component formed from an inventive film. Packages prepared from the films of the invention may hold a weight from 1 kg to 100 kg, from 1 kg to 50 kg, or from 1 to 25 kg.

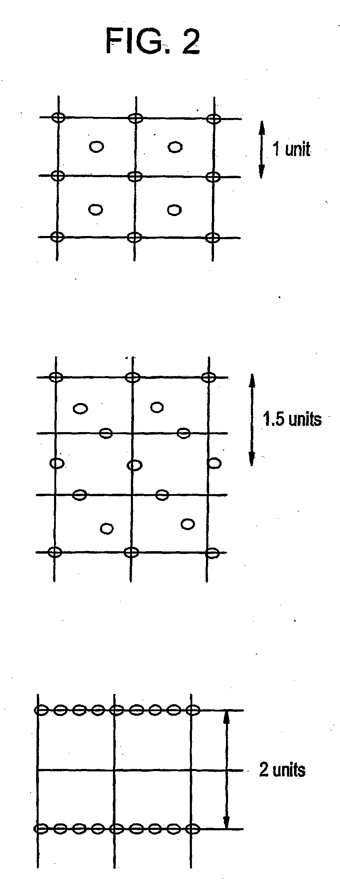

The configuration of the perforations within a film will vary, and will depend on the final use of the film. Sheets of the film may have perforations in designated areas within the sheet. Designated areas may be of any size and shape. Within these designated areas, the perforations may exist in various configurations, including, but not limited to, perforation size gradients along a particular axis of an area, perforation density gradients along a particular axis of an area, and perforation gradients of different shapes and/or sizes. Ideally the perforation pattern (size of perforations, number of perforations and the spacing of perforations) should be such that a container is permeable to air under pressure, but substantially impermeable to moisture. Examples of alternative perforations cell patterns are shown in Figure 2.

In one embodiment, the film is perforated in one or more designated areas. In such a design, the designated areas may be localized.to a specified area of the package, or the designated areas may cover the entire surface of the film. In another embodiment, the film is perforated, such that a package formed from such a composition, contains perforations only within one or more horizontally flat surfaces. The perforations may be evenly spaced within the one or more designated areas, or spaced at different perforation densities within the one or more designated areas. In one embodiment, a package comprises at least four sides, and wherein at least one side has a larger number of perforations per square inch of film, compared to at least one other side. In another embodiment, a package comprises at least four sides, and wherein at least two sides have a larger number of perforations per square inch of film, compared to at least two other sides. In each of these embodiments, the size and shape of the perforations may vary. The sizes of the perforations may increase as the number of perforations decrease. The inventive packages typically contain one or two or more seams.

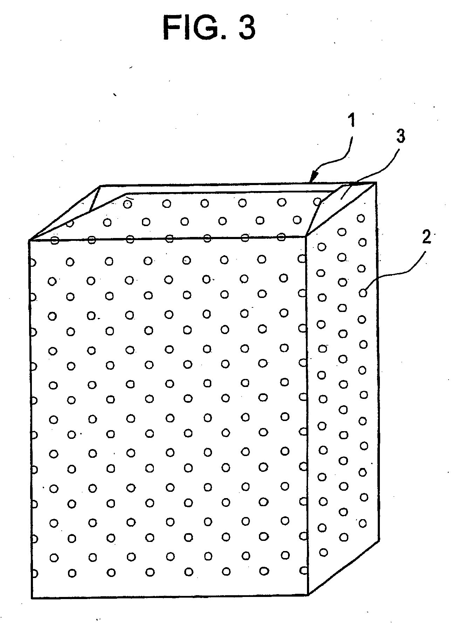

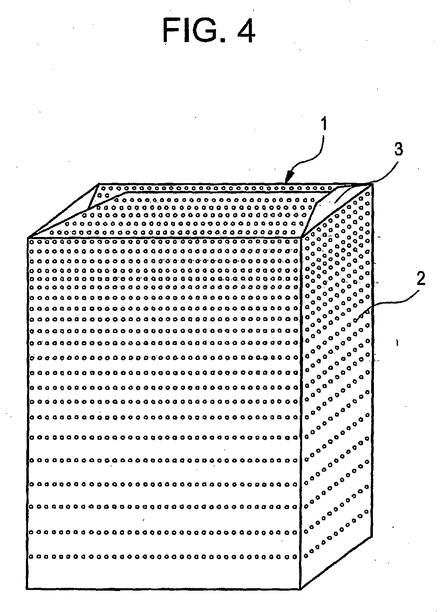

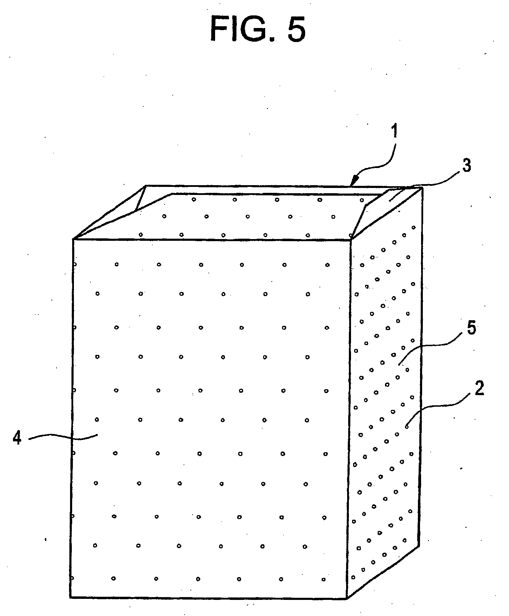

In a preferred embodiment, the inventive films are used to form valve bags. Three representations of such a bag are shown in Figures 3-5, respectively. As shown in these figures, the top portion of the bag contains an opening for the insertion of a filing spout. In one embodiment, the bottom portion and the respective area of the top portion are heat sealed to maintain a closed environment, other than the opening for the filling spout. Thus, the bag is designed to fit around the filling spout, leaving little open areas for powder to escape during a filling process. The perforations, as shown in Figures 3-5, primarily serve as an indication of configuration patterns, and are not necessarily drawn to scale.

The inventive films and/or packages may have a combination of two or more of the embodiments described herein.

Resins - Overview

The films of the invention contain at least one layer or ply. In a preferred embodiment, the film contains only one layer or ply. Each layer or ply is formed from a composition that typically contains at least one thermoplastic polymer. The choice of resin for each layer will depend on the location of the layer, the softening and/or melting temperature of the resin, and the adhesion forces between consecutive layers. The amount of the thermoplastic polymer in each layer will vary, depending on the properties desired, for example, film strength properties, and on other film components, and/or the type or types of polymers employed. Generally, for polyolefins, the amount is at least 40 percent, preferably at least 45 percent, more preferably at least 60 percent, by weight of the total weight of the composition. Preferred polyolefins include ethylene-based polymers and propylene-based polymers.

Any thermoplastic polymer or thermoplastic polymer blend can be used in the practice of this invention, and representative polymers include the natural or synthetic resins, such as, but not limited to, styrene block copolymers; rubbers, polyolefins, such as polyethylene, polypropylene and polybutene; ethylene/vinyl acetate (EVA) copolymers; ethylene acrylic acid copolymers (EAA); ethylene acrylate copolymers (EMA, EEA, EBA); polybutylene; polybutadiene; nylons; polycarbonates; polyesters; polyethylene oxide; polypropylene oxide; ethylene-propylene interpolymers, such as ethylene-propylene rubber and ethylene-propylene-diene monomer rubbers; chlorinated polyethylene; thermoplastic vulcanates; ethylene ethylacrylate polymers (EEA); ethylene styrene interpolymers (ESI); polyurethanes; as well as functionally modified polyolefins, such as silane-graft or maleic anhydride graft-modified olefin polymers; and combinations of two or more of these polymers.

The thermoplastic polymer or thermoplastic polymer blend may comprise one or more propylene-based homopolymers or interpolymers and/or one or more ethylene-based homopolymers or interpolymers, each as the sole polymer component or as one polymer component (in addition to one or more other polymer components).

Suitable comonomers useful for polymerizing with an olefin, such as ethylene or propylene, include, but are not limited to, ethylenically unsaturated monomers, conjugated or nonconjugated dienes or polyenes. Examples of such comonomers include ethylene and the C3-C20 $\alpha$-olefins, such as propylene, 1-butene, 1-pentene, 1-hexene, 4-methyl-1-pentene, 1-heptene, 1-octene, 1-nonene, 1-decene, and the like. Preferred comonomers include ethylene, propylene, 1-butene, 1-hexene and 1-octene, the latter of which is especially preferred. Other suitable monomers include styrene, halo-or-alkyl-substituted styrenes, tetrafluoroethylenes, vinylbenzocyclobutanes, butadienes, isoprenes, pentadienes, hexadienes, octadienes and cycloalkenes, e.g., cyclopentene, cyclohexene and cyclooctene. Typically, ethylene is copolymerized with one C3-C20 α-olefin. Preferred comonomers include C3-C8 α-olefins, such as propylene, 1-butene, 1-pentene, 4-methyl-1-pentene, 1-hexene, 1-heptene, and 1-octene, and more preferably propylene, 1-butene, 1-hexene and 1-octene.

In one embodiment, an olefin-based interpolymer has a comonomer content that comprises not greater than 20, preferably less than 15, more preferably less than 10, even more preferably less than 7, and most preferably less than 5 weight percent of said interpolymer. All individual weight percentages and subranges from 5 to 20 weight percent are included herein and disclosed herein.

In another embodiment, an olefin-based interpolymer has a comonomer content that comprises not greater than 7, preferably less than 5, more preferably less than 3, most preferably less than 2 weight percent of said interpolymer. All individual weight percentages and subranges from 2 to 7 weight percent are included herein and disclosed herein.

In another embodiment, an olefin-based interpolymer has a comonomer content that comprises not greater than 50, preferably less than 40, more preferably less than 30, most preferably less than 20 weight percent of said interpolymer. All individual weight percentages and subranges from 20 to 50 weight percent are included herein and disclosed herein.

The amount of comonomer content in an interpolymer of the invention may be greater than 50 weight percent, or may be less than 2 weight percent.

Ethylene-based polymers include homopolymers of ethylene as well as random and block interpolymers of ethylene. Such polymers include copolymers, terpolymers; tetrapolymers and higher order polymers of ethylene, propylene and other olefins, such as optional dienes.

Ethylene-based polymers include linear low density polyethylene (LLDPE), high density polyethylene (HDPE), low density polyethylene (LDPE), ultra low density polyethylene (ULDPE), very low density polyethylene (VLDPE), homogeneously branched linear ethylene polymers, homogeneously branched, substantially linear ethylene polymers, and heterogeneous linear ethylene polymers. The amount of one or more of these polymers, if any, in a film, will vary depending on the properties desired, the other components, and the type polyethylene(s).

The terms "homogeneous" and "homogeneously-branched" are used in reference to ethylene/α-olefin interpolymers, in which the α-olefin comonomer is randomly distributed within a given polymer molecule, and substantially all of the polymer molecules have the same ethylene-to-comonomer ratio.

The homogeneously branched ethylene interpolymers that can be used in the practice of this invention include homogeneously branched linear ethylene interpolymers, and homogeneously branched substantially linear ethylene interpolymers.

Included amongst the homogeneously branched linear ethylene interpolymers, are ethylene polymers, which lack long chain branching, but do have short chain branches, derived from the comonomer polymerized into the interpolymer, and which are homogeneously distributed, both within the same polymer chain, and between different polymer chains. That is, homogeneously branched linear ethylene interpolymers lack long chain branching, just as is the case for the linear low density polyethylene polymers or linear high density polyethylene polymers, and are made using uniform branching distribution polymerization processes, as described, for example, by Elston in U.S. Patent 3,645,992. Commercial examples of homogeneously branched linear ethylene/α-olefin interpolymers include TAFMER™ polymers supplied by the Mitsui Chemical Company and EXACT™ polymers supplied by Exxon Chemical Company.

The homogeneously branched substantially linear ethylene interpolymers are described in U.S. Patent Nos. 5,272,236; 5,278,272; 6,054,544; 6,335,410, and 6,723,810 the entire contents of each is herein incorporated by reference.

In addition, the substantially linear ethylene interpolymers are homogeneously branched ethylene polymers having long chain branching. The long chain branches have the same comonomer distribution as the polymer backbone, and can have about the same length as the length of the polymer backbone. Typically, "substantially linear" means that the bulk polymer is substituted, on average, with 0.01 long chain branches per 1000 total carbons (including both backbone and branch carbons) to 3 long chain branches per 1000 total carbons. In one embodiment, the polymer is substituted with 0.01 long chain branches per 1000 total carbons, to 1 long chain branch per 1000 total carbons, more preferably from 0.05 long chain branches per 1000 total carbons to 1 long chain branch per 1000 total carbons, and especially from 0.3 long chain branches per 1000 total carbons to 1 long chain branch per 1000 total carbons.

Commercial examples of substantially linear polymers include the ENGAGE™ polymers and the AFFINITY™ polymers (both available from The Dow Chemical Company).

The substantially linear ethylene interpolymers form a unique class of homogeneously branched ethylene polymers. They differ substantially from the well-known class of conventional, homogeneously branched linear ethylene interpolymers, described by Elston in U.S. Patent 3,645,992, and, moreover, they are not in the same class as conventional heterogeneous Ziegler-Natta catalyst polymerized linear ethylene polymers (for example, ultra low density polyethylene (ULDPE), linear low density polyethylene (LLDPE) or high density polyethylene (HDPE), made, for example, using the technique disclosed by Anderson et al., in U.S. Patent 4,076,698); nor are they in the same class as high pressure, free-radical initiated, highly branched, polyethylenes, such as, for example, low density polyethylene (LDPE), ethylene acrylic acid (EAA) copolymers and ethylene vinyl acetate (EVA) copolymers.

The homogeneously branched substantially linear ethylene interpolymers useful in the invention have excellent processability, even though they have a relatively narrow molecular weight distribution. Surprisingly, the melt flow ratio according to ASTM D 1238 ($I_{10}/I_2$) of the substantially linear ethylene interpolymers can be varied widely, and essentially independently of the molecular weight distribution, Mw/Mn, or MWD. This surprising behavior is contrary to conventional homogeneously branched linear ethylene interpolymers, such as those described, for example, by Elston in U.S. 3,645,992, and heterogeneously branched conventional Ziegler-Natta polymerized linear poly ethylene interpolymers, such as those described, for example, by Anderson et al. in U.S. 4,076,698.

Unlike the homogeneously branched substantially linear ethylene interpolymers, linear ethylene interpolymers (whether homogeneously or heterogeneously branched) have rheological properties that are more influenced by the molecular weight distribution.

The homogeneously branched linear or substantially linear ethylene polymers are characterized as having a narrow molecular weight distribution (Mw/Mn). For the linear and substantially linear ethylene polymers, the molecular weight distribution, Mw/Mn, is for example, less than or equal to 5, preferably less than or equal to 4, and more preferably from 1.5 to 4, and even more preferably from 1.5 to 3, and most preferably from 2.5 to 3.5. All individual values and subranges from 1 to 5 are included herein and disclosed herein.

The distribution of comonomer branches for the homogeneous linear and substantially linear ethylene polymers is characterized by its SCBDI (Short Chain Branch Distribution Index) or CDBI (Composition Distribution Branch Index), and is defined as the weight percent of the polymer molecules having a comonomer content within 50 percent of the median total molar comonomer content. The CDBI of a polymer is calculated from data obtained from techniques known in the art, such as, for example, temperature rising elution fractionation (abbreviated herein as "TREF"), as described, for example, by Wild et al., Journal of Polymer Science, Poly. Phys. Ed., Vol. 20, p. 441 (1982), or in U.S.-A-Patent Nos. 4,798,081 and 5,008,204. The SCBDI or CDBI for the substantially linear polymers useful in the compositions of the present invention is preferably greater than 50 percent, especially greater than 70 percent, more preferably greater than 90 percent.

The homogeneously branched substantially linear ethylene polymers used in the film composition of the invention are known, and they, and their method of preparation, are described in, for example, U.S.-A-Patent Nos. 5,272,236; 5,278,272 and 5,703,187; which are each incorporated in its entirety, herein, by reference.

The homogeneous linear or substantially linear ethylene polymers may be suitably prepared using a constrained geometry metal complex, such as are disclosed in US Patent Nos. 5,272,236 and 5,278,272 (see also, U.S. Application Serial No. 545,403, filed July 3, 1990 (EP-A-416,815; U.S. 5,703,187; 5,872,201); U.S. Application Serial No. 702,475, filed May 20, 1991 (EP-A-514,828; U.S. 6,118,013); as well as U.S.-A-Patent Nos. 5,470,993; 5,374,696; 5,231,106; 5,055,438; 5,057,475; 5,096,867; 5,064,802 and 5,132,380. In U.S. Application Serial No. 720,041, filed June 24, 1991, (EP-A-514,828) certain borane derivatives of the foregoing constrained geometry catalysts are disclosed, and a method for their preparation taught and claimed. In U.S.-A-5,453,410, combinations of cationic constrained geometry catalysts with an alumoxane are disclosed as suitable olefin polymerization catalysts).

The heterogeneous linear ethylene polymers can also be used in the present invention. Heterogeneous linear ethylene polymers include copolymers of ethylene and one or more C3 to C8 α-olefins. Homopolymers of ethylene can also be prepared using the same catalysts that are used to prepare the heterogeneous systems, such as Ziegler-Natta catalysts. Both the molecular weight distribution, and the short chain branching distribution, arising from α-olefin copolymerization, are relatively broad compared to homogeneous linear ethylene polymers. Heterogeneous linear ethylene polymers can be made in a solution, slurry, or gas phase process using a Ziegler-Natta catalyst, and are well known to those skilled in the art. For example, see U.S.-A-Patent No. 4,339,507, the entire contents of which is incorporated herein by reference.

Mixtures of heterogeneous and homogeneous ethylene polymers ("composite polyethylene") can also be used for the film compositions of the present invention, and examples of such are disclosed by Kolthammer et al. in U.S.-A-Patents 5,844,045; 5,869,575; and 6,448,341; the entire contents of each is incorporated herein by reference. Examples of in-reactor polyethylene blends of substantially linear polyethylene and LLDPE are disclosed in U.S. Pat. No. 5,844,045 and U.S. Pat. No. 5,869,575. Preferably, the LLDPE fraction of the in-reactor polyethylene blend is at least about fifty weight percent (50 weight percent) of the in-reactor blend, more preferably at least about fifty five weight percent (55 weight percent), most preferably at least about sixty weight percent (60 weight percent). Preferably the LLDPE fraction of the in-reactor blend does not exceed about eighty five weight percent (85 weight percent) of the in-reactor blend, more preferably does not exceed about eighty weight percent (80 weight percent), most preferably does not exceed about seventy five weight percent (75 weight percent).

Additional polymers suitable for use in the invention include propylene-based polymers. Propylene-based polymers include propylene homopolymer, interpolymers, as well as random and impact interpolymers of propylene, and coupled propylene-based polymers. Such polymers include copolymers, terpolymers, tetrapolymers and higher order polymers of ethylene, propylene and other olefins, such as optional dienes. Suitable propylene-base polymers are disclosed in U.S. Patent 6,593,005; U.S. Patent 6,939,919 and EP 1263873, and the entire contents of each is incorporated herein by reference.

Suitable propylene-based polymers include impact propylene copolymers. Such copolymers are commercially available and are well within the skill in the art, for instance, as described by E. P. Moore, Jr. in Polypropylene Handbook, Hanser Publishers, 1996, page 220 and U.S. Pat. Nos. 3,893,989 and 4,113,802. The term "impact copolymer" is used herein to refer to heterophasic propylene copolymers where polypropylene is the continuous phase and an elastomeric phase is uniformly dispersed therein. The impact copolymers result from an in-reactor process rather than physical blending. Usually the impact copolymers are formed in a dual or multi-stage process, which optionally involves a single reactor with at least two process stages taking place therein, or optionally multiple reactors. Advantageously, the impact copolymers have at least about 5 weight percent, preferably at least about 10, preferably up to about 40, more preferably up to about 35 weight percent, further more preferably up to about 25 weight percent, and most preferably up to about 20 weight percent ethylene. Examples of some suitable impact polypropylene copolymers are disclosed in U.S. 6,593,005, to Tau et al., which is incorporated herein by reference.

In one embodiment, a film layer is formed, or prepared, from a composition containing at least the following: a coupled propylene-based polymer, and an "in-reactor blend" of a substantially linear polyethylene (or a homogeneously branched linear polyethylene) and a linear low density polyethylene. The "in-reactor blend" may also contain LDPE, LLDPE, HDPE, substantially linear polyethylene, homogeneously branched linear polyethylene, and blends thereof. The polymer composition may also contain another ethylene-based polymer, such as a LLDPE and/or substantially linear polyethylene (or homogeneously branched linear polyethylene) in order to improve the compatibility between the coupled propylene-based polymer and the "in-reactor blend." Examples of such compositions are disclosed in U.S. Patent 6,593,005, which is incorporated herein, in its entirety, by reference.

In another embodiment, a film layer is formed, or prepared, from a composition containing at least the following components: a propylene-based homopolymer or interpolymer, which each may or may not be coupled; and one or more ethylene-based homopolymers and/or interpolymers.

Polymer compositions containing an ethylene-base polymer and a propylene-based polymer may also contain an ethylene/propylene/rubber to compatibilize the main component polymers. Stabilizer and antioxidants may be added to a resin formulation to protect the resin from degradation, caused by reactions with oxygen, which are induced by such things as heat, light, or residual catalyst from the raw materials. Antioxidants are commercially available from Ciba-Geigy, located in Hawthorn, N.Y., and include Irganox® 565, 1010 and 1076, which are hindered phenolic antioxidants. These are primary antioxidants which act as free radical scavengers, and may be used alone or in combination with other antioxidants, such as phosphite antioxidants, like Irgafos® 168, available from Ciba-Geigy. Phosphite antioxidants are considered secondary antioxidants and are not generally used alone. These antioxidants are primarily used as peroxide decomposers. Other available antioxidants include, but are not limited to, Cyanox® LTDP, available from Cytec Industries in Stamford, Conn., and Ethanox® 1330, available from Albemarle Corp. in Baton Rouge, Louisiana. Many other antioxidants are available for use by themselves, or in combination with other such antioxidants. Other resin additives include, but are not limited to, ultraviolet light absorbers, antistatic agents, pigments, dyes, nucleating agents, fillers slip agents, fire retardants, plasticizers, processing aids, lubricants, stabilizers, smoke inhibitors, viscosity control agents and anti-blocking agents.

The film should maintain its structural integrity upon exposure to elevated temperatures and pressures. In a preferred embodiment, suitable materials for one or more film layers include one or more polyolefin homopolymers and interpolymers. Examples of such polymers include, but are not limited to; polyethylene-based polymers, such as, DOWLEX™ and ELITE™, and polypropylene-based polymers, such as, INSPIRE™ (all from The DOW Chemical Company). Each layer may contain one polymer or two or more polymers, such as a polymer blend.

The specific properties of each layer will depend on the polymer composition used. The properties provided below are representative of polyolefin compositions, containing one or more polymers, and used in one or more film layers. These properties are also representative of other polymer compositions that fall within the noted properties. The properties of the polymer compositions, provided below, are not intended to limit the scope of this invention, in terms of the range of polyolefins and other polymers and blends suitable for use in the invention. Preferably the polymer composition comprises at least one ethylene-based polymer and/or at least one propylene-based polymer.

In one embodiment, the polymer composition will typically be characterized by a Vicat softening point from 50°C to 230°C, preferably from 70°C to 200°C, and more preferably from 100°C to 150°C. All individual values and subranges from 50°C to 230°C are included herein and disclosed herein.

In another embodiment, the polymer composition will typically be characterized by a DSC melting point from 50°C to 250°C, preferably from 70°C to 200°C, more preferably from 100°C to 180°C, and even more preferably from 120°C to 170°C. All individual values and subranges from 50°C to 250°C are included herein and disclosed herein.

In another embodiment, the polymer composition will typically be characterized by a melt index ($I_2$), at 190°C and 2.16 kg load (ASTM D-1238-04), from 0.1 to 100 g/10 min, preferably from 0.2 to 50 g/10 min, more preferably from 0.3 to 10 g/10 min, and even more preferably from 0.4 to 5 g/10 min. All individual values and subranges from 0.1 to 100 g/10 min are included herein and disclosed herein.

In another embodiment, the polymer composition will typically be characterized by a melt flow rate, at 230°C and 2.16 kg load (ASTM D-1238-04), from 0.1 to 100 g/10 min, preferably from 0.2 to 50 g/10 min, more preferably from 0.3 to 10 g/10 min, and even more preferably from 0.4 to 5 g/10 min. All individual values and subranges from 0.1 to 100 g/10 min are included herein and disclosed herein.

In another embodiment, the polymer composition will be characterized by a weight average molecular weight (Mw) from 20,000 to 1,000,000, and all individual values and subranges from 20,000 to 1,000,000 are included herein and disclosed herein.

In another embodiment, the polymer composition will typically have a total percent crystallinity of less than 60%, and preferably less than 50%, as measured by DSC.

In another embodiment, the polymer composition will typically have a density from 0.88 g/cm3 to 0.96 g/cc, preferably from 0.89. g/cm3 to 0.95 g/cc, and more preferably from 0.90 to 0.94 g/cc (ASTM D792-00). All individual values and subranges from 0.88 g/cc to 0.96 g/cc are included herein and disclosed herein.

In another embodiment, the polymer composition will typically have a molecular weight distribution, Mw/Mn, from 2 to 20, preferably from 3 to 10, and more preferably from 4 to 8, and even more preferably from 5 to 7. All individual values and subranges from 2 to 20 are included herein and disclosed herein.

In another embodiment, the polymer composition contains at least one polymer that has a DSC melting point from 50°C to 250°C, preferably from 70°C to 200°C, more preferably from 100°C to 180°C, and even more preferably from 120°C to 170°C. All individual values and subranges from 50°C to 250°C are included herein and disclosed herein. In one embodiment, the at least one polymer is an ethylene homopolymer. In another embodiment, the at least one polymer is an ethylene-based interpolymer. In another embodiment, the at least one polymer is an propylene homopolymer. In another embodiment, the at least one polymer is an propylene-based interpolymer.

In another embodiment, the polymer composition contains at least one polymer that has a melt index ($I_2$), at 190°C and 2.16 kg load (ASTM D=1238-04), from 0.1 to 100 g/10 min, preferably from 0.2 to 50 g/10 min, more preferably from 0.3 to 10 g/10 min, and even more preferably from 0.4 to 5 g/10 min. All individual values and subranges from 0.1 to 100 g/10 min are included herein and disclosed herein. In one embodiment, the at least one polymer is an ethylene homopolymer. In another embodiment, the at least one polymer is an ethylene-based interpolymer.

In another embodiment, the polymer composition contains at least one polymer that has a melt flow rate, at 230°C and 2.16 kg load (ASTM D-1238-04), from 0.1 to 100 g/10 min, preferably from 0.2 to 50 g/10 min, more preferably from 0.3 to 10 g/10 min, and even more preferably from 0.4 to 5 g/10 min. All individual values and subranges from 0.1 to 100 g/10 min are included herein and disclosed herein. In one embodiment, the at least one polymer is an propylene homopolymer. In another embodiment, the at least one polymer is an propylene-based interpolymer.

In another embodiment, the polymer composition contains at least one polymer that has a weight average molecular weight (Mw) from 20,000 to 1,000,000, and all individual values and subranges from 20,000 to 1,000,000 are included herein and disclosed herein. In one embodiment, the at least one polymer is an ethylene homopolymer. In another embodiment, the at least one polymer is an ethylene-based interpolymer. In another embodiment, the at least one polymer is an propylene homopolymer. In another embodiment, the at least one polymer is an propylene-based interpolymer.

In another embodiment, the polymer composition contains at least one polymer that has a total percent crystallinity of less than 60%, and preferably less than 50%, as measured by DSC. In one embodiment, the at least one polymer is an ethylene homopolymer. In another embodiment, the at least one polymer is an ethylene-based interpolymer. In another embodiment, the at least one polymer is an propylene homopolymer. In another embodiment, the at least one polymer is an propylene-based interpolymer.

In another embodiment, the polymer composition contains at least one polymer that has a density from 0.87 g/cc to 0.97 g/cc, preferably from 0.90 g/cc to 0.95 g/cc, and more preferably from 0.91 to 0.94 g/cc (ASTM D792-00). All individual values and subranges from 0.87 g/cc to 0.97 g/cc are included herein and disclosed herein. In one embodiment, the at least one polymer is an ethylene homopolymer. In another embodiment, the at least one polymer is an ethylene-based interpolymer. In another embodiment, the at least one polymer is an propylene homopolymer. In another embodiment, the at least one polymer is an propylene-based interpolymer.

In another embodiment, the polymer composition contains at least one polymer that has a molecular weight distribution, Mw/Mn, from 1 to 10, preferably from 1 to 7, and more preferably from 1.5 to 5, and even more preferably from 1.5 to 3.5. All individual values and subranges from 1 to 10 are included herein and disclosed herein. In one embodiment, the at least one polymer is an ethylene homopolymer. In another embodiment, the at least one polymer is an ethylene-based interpolymer. In another embodiment, the at least one polymer is an propylene homopolymer. In another embodiment, the at least one polymer is an propylene-based interpolymer.

In a preferred embodiment, the at least one polymer is a propylene/$\alpha$-olefin interpolymer or a propylene/ethylene copolymer. In a further embodiment, the $\alpha$-olefin is selected from the group consisting of 1-butene, 1-pentene, 1-hexene, 1-heptene, 1-octene and 1-butene, 1-nonene, 1-decene, 4-methyl-1-pentene and mixtures thereof. In another embodiment, the propylene/$\alpha$-olefin interpolymer, or propylene/ethylene copolymer, has a melt index ($I_2$) from 0.1 g/10 min to 100 g/10 min. In another embodiment, the propylene/$\alpha$-olefin interpolymer, or propylene/ethylene copolymer, has a density from 0.86 to 0.93 g/cc, preferably from 0.86 to 0.92 g/cc, and more preferably from 0.86 to 0.91 g/cc. The propylene/$\alpha$-olefin interpolymer or propylene/ethylene copolymer may each have a combination of two or more of these embodiments.

In another embodiment, the at least one polymer is a propylene/$\alpha$-olefin interpolymer, or a propylene/ethylene copolymer, and has a melt index from 0.1 to 50 grams/10 minutes, a density from 0.86 to 0.92 grams/cm$^3$, and a molecular weight distribution, Mw/Mn, from 2 to 10.

In another preferred embodiment, the at least one polymer is an ethylene/$\alpha$ olefin interpolymer. In a further embodiment, ethylene/$\alpha$-olefin interpolymer comprises a copolymer formed from monomers selected from the group consisting of ethylene and 1-octene, ethylene and 1-butene, ethylene and 1-hexene, ethylene and 1-pentene, ethylene and 1-heptene, ethylene and propylene, ethylene and 4-methyl-1-pentene, and mixtures thereof. Preferably, monomers are selected from the group consisting of ethylene and 1-octene; and ethylene and 1-butene. In another embodiment, the ethylene/$\alpha$-olefin interpolymer has a melt index ($I_2$) from 0.1 g/10 min to 100 g/10 min. In another embodiment, the ethylene/$\alpha$-olefin interpolymer has a density from 0.900 to 0.950 g/cc, preferably from 0.900 to 0.945 g/cc, and more preferably from 0.900 to 0.940 g/cc. The ethylene/$\alpha$-olefin interpolymer may have a combination of two or more of these embodiments.

In another embodiment, the ethylene/$\alpha$-olefin interpolymer has a melt index from 0.2 to 50 grams/10 minutes, a density from 0.900 to 0.950 g/cc, and preferably from 0.900 to 0.940 g/cc, and a molecular weight distribution, Mw/Mn, from 1.5 to 5.

In another embodiment, the at least one polymer is a propylene-based, propylene/ethylene interpolymer. In a further embodiment, the propylene/ethylene interpolymer has a melt index ($I_2$) from 0.1 g/10 min to 100 g/10 min. In another embodiment, the propylene/ethylene interpolymer has a melt index from 0.1 to 50 grams/10 minutes, a density from 0.86 to 0.92 grams/cm$^3$, and a molecular weight distribution, Mw/Mn, from 2 to 10. The propylene/ethylene interpolymer may have a combination of two or more of these embodiments.

The polymer composition may have a combination of two or more embodiments described herein.

The polymer components of such compositions may have a combination of two or more embodiments described herein.

Suitable polymer compositions may contain an ethylene-based homopolymer or interpolymer and a propylene-based homopolymer of interpolymer. In one embodiment, the polymer composition contains 50 weight percent or more of an ethylene-based homopolymer or interpolymer. In a further embodiment, the polymer composition contains 40 weight percent or less of a propylene-based homopolymer or interpolymer. In another embodiment, the polymer composition contains from 50 to 90 weight percent, preferably from 55 to 80 weight percent, and more preferably from 60 to 75 weight percent of an ethylene-based homopolymer or interpolymer. In a further embodiment, the polymer composition contains from 10 to 50 weight percent, preferably from 20 to 40 weight percent, and even more preferably from 25 to 35 weight percent of a propylene-based homopolymer or interpolymer. The polymer molecules of the propylene-based homopolymer of interpolymer may be coupled.

*Process for Forming the Films of the Invention*

A film of the invention may be prepared by selecting the thermoplastic polymers or blends suitable for making each layer; forming a film of each layer, and where the film contains more than one layer, bonding the layers, or coextruding or casting one or more layers. Desirably, the film layers are bonded continuously over the interfacial area between films (film layers).

Films may be perforated prior to, or during, the manufacturing of a container. In addition, the manufactured container may be perforated at a later date. Perforation mechanisms include, but are not limited to, pinned rollers, plated pins and laser techniques. In a preferred embodiment, perforations are from both sides of the film, and the perforation crater is located on the exterior surface of a container formed from such a film. The shape and size of the perforations, and the amount of perforations will depend on the final use of the film.

For each layer, typically, it is suitable to extrusion blend the components and any additional additives, such as slip; anti-block, and polymer processing aids. The extrusion blending should be carried out in a manner, such that an adequate degree of dispersion is achieved. The parameters of extrusion blending will necessarily vary depending upon the components. However, typically the total polymer deformation, that is, mixing degree, is important, and is controlled by, for example, the screw-design and the melt temperature. The melt temperature during film forming will depend on the film components.

After extrusion blending, a film structure is formed. Film structures may be made by conventional fabrication techniques, for example, bubble extrusion, biaxial orientation processes (such as tenter frames or double bubble processes), cast/sheet extrusion, coextrusion and lamination. Conventional bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing processes, such as described in the "double bubble" process of U.S.-A-Patent No. 3,456,044 (Pahlke), and the processes described in U.S.-A-Patent No. 4,352,849 (Mueller), U.S.-A-Patent Nos. 4,820,557 and 4,837,084 (both to Warren), U.S.-A-Patent No. 4,865,902 (Golike et al.), U.S.-A-Patent No. 4,927,708 (Herran et al.), U.S.-A-Patent No. 4.952.451 (Mueller), and U.S.-A-Patent Nos. 4,963,419 and 5,059,481 (both to Lustig et al.), can also be used to make the novel film structures of this invention. All of these patents are incorporated herein by reference.

The melt temperature during the film forming will vary depending on the components of the film. Generally, the melt temperature is from 175°C to 300°C, preferably from 185°C to 240°C, and more preferably from 195°C to 220°C.

Manufacturing techniques for making structures of the invention include vertical form-fill-sealing techniques, such as that described in Packaging Machinery Operation, Chapter 8: Form-Fill-Sealing, by C. Glenn Davis (Packaging Machinery Manufacturers Institute, 2000 K Street, N.W., Washington, D.C. 20006); The Wiley Encyclopedia of Packaging Technology, Marilyn Bakker, Editor-in-chief, pp. 364-369 (John Wiley & Sons); U.S. 5,288,531 (Falla et al.), U.S. 5,721,025 (Falla et al.), U.S. 5,360,648 (Falla et al.) and U.S. 6,117,465 (Falla et al.); other film manufacturing techniques; such as that discussed in Plastic Films, Technology and Packaging Applications (Technomic Publishing Co., Inc. (1992)), by Kenton R. Osbom and Wilmer A Jenkens, pp. 39-105. All of these patents and the references are incorporated herein by reference.

Other film manufacturing techniques are disclosed in U.S. 6,723,398 (Chum et al.). Post processing techniques, such as radiation treatment and corona treatment, especially for printing applications, can also be accomplished with the materials of the invention. Film made from the invention can also be silane cured, or the polymers used to make the inventive article can be grafted post manufacture (such as maleic anhydride grafted polymers, including techniques disclosed in U.S. 4,927,888 (Strait et al.), U.S. 4,950,541 (Tabor et al.), U.S. 4,762,890 (Strait et al.), U.S. 5,346,963 (Hughes et. al.), U.S. 4,684,576 (Tabor et al.). All of these patents are incorporated herein by reference.

After the film has been formed, it can be stretched. The stretching can be accomplished in any manner, conventionally used in the art.

Sheets of the film can be bonded by heat sealing or by use of an adhesive. Heat sealing can be effected using conventional techniques, including, but not limited to, a hot bar, impulse heating, side welding, ultrasonic welding, or other alternative heating mechanisms.

The films of the aforementioned processes may be made to any thickness depending upon the application. Typically the films have a total thickness of from 25 to 1000 microns, preferably from 50 to 500 microns, more preferably from 50 to 250 microns.

DEFINITIONS

Any numerical range recited herein, include all values from the lower value to the upper value, in increments of one unit, provided that there is a separation of at least 2 units between any lower value and any higher value. As an example, if it is stated that the amount of a component, or a value of a compositional or physical property, such as, for example, amount of a blend component; softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. Numerical ranges have been recited, as discussed herein, in reference to Vicat softening point, DSC melting temperature, perforation size, film thickness, melt index, melt flow rate, weight average molecular weight, molecular weight distribution, percent crystallinity, density, weight percent of a component, pressure, and other properties.

The term "film," as used herein, means a single or multi-layered film structure.

The term "composition," as used herein, includes one or more components which comprise the composition, as well as reaction products and decomposition products formed from the component(s) of the composition.

The terms "perforations," as used herein, refers to holes made within the film using an impact mechanism, a laser or other mechanical or optical device. Perforations may be of varying sizes and varying shapes. Perforations are individually, and thus, each independently, of a size less than, or equal to, 100 microns ($\mu$m)

The phrase "perforations of the same size," and similar phrases, as used herein, refer to perforations that all have the same size, within experimental and/or equipment error.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The term "thermoplastic polymer" or "thermoplastic composition" and similar terms, mean a polymer or polymer composition that is substantially thermally extrudable or deformable, albeit relatively aggressive conditions may be required.

The terms "blend" or "polymer blend," as used herein, mean a blend of two or more polymers. Such polymers may be coupled and/or crosslinked. Such a blend may or may not be miscible (not phase separated at molecular level). Such a blend may or may not be phase separated. Such a blend may or may not contain one or more domain configurations, as determined from transmission electron spectroscopy, light scattering, x-ray spattering, and other methods known in the art.

The term "ethylene-based interpolymer," as used herein means an interpolymer that contains at least 50 mole percent, and preferably greater than 50 mole percent ethylene.

The term "propylene-based interpolymer," as used herein means an interpolymer that contains at least 50 mole percent, and preferably greater than 50 mole percent propylene.

TEST PROCEDURES

Several test methods were used to evaluate the films. The specific test parameters within each test will depend on the polymer or polymer composition used. Some of the tests below describe test parameters that are indicated as representative of polyolefin resins. The particular parameters of a test are not intended to limit the scope of this invention. Those skilled in the art will understand the limitations of a particular set of test parameters, and will be able to determine appropriate parameters for other types of polymers.

Gurley Air Resistance

The "permeability" of film samples can be evaluated using the Gurley Hill Porosity test method, in accordance with test method TAPPI T460 om-02. This test measures the air resistance of a small sample (approximately one square inch), in terms of the time required for a given volume of air at a given pressure to "permeate" through the sample.

Haver & Boecker Bag Permeability Test

Fabricated plastic bags can be tested for volumetric air permeability using an apparatus similar to what is used to fill a bag with cement, except that only air is introduced into the bag. The filling apparatus maintains a pressure of approximately 50 mBar and measures the volume of air escaping the bag per unit time.

Moisture Barrier

The moisture barrier of a film sample is measured in accordance-with a Hydrohead Water Pressure Test (ISO 1420 A1 (2001)).

Microscopy of Perforations

Optical microscopy can be used to characterize the appearance and size of the perforations in the films. For each film sample, three "holes" are randomly selected for analysis for each surface of the blown film (12 holes total). Images were taken with a LEICA MP AZO microscope using reflected incident lighting and back lighting and a SONY DKC-5000 digital camera. Images were captured using a 80x objective lens and processed using Adobe Photoshop 5.0. The "adjust image levels" was used to maximize image information and achieve optimal contrast. Measurements are then taken to estimate the size of the hole. For holes that are circular or elliptical in shape, one or two dimensions are needed to estimate the area of the hole.

Mechanical Properly Testing

Dart Impact Strength is measured in accordance with ASTM D1709-03. Elmendorf Tear is measured in accordance with ASTM D 1922-03. Tensile is measured in accordance with ASTM D882-02. Secant Modulus is measured in accordance with ASTM D882-02.

Compositional Property Testing

The density of the ethylene homopolymers and interpolymers, and other polyolefins is measured in accordance with ASTM D-792-00. Some samples are annealed at ambient conditions for 24 hours before the measurement is taken. ASTM D-792-00 can also be used to measure density of other polymers as noted in this test procedure.

The melt index ($I_2$) of ethylene-based homopolymers and interpolymers is measured in accordance with ASTM D-1238-04, condition 190°C/2.16 kg. ASTM D-1238-04 can also be used to measure melt index of other polymers as noted in this test procedure. The melt flow rate (MFR) of propylene-based homopolymers and interpolymers is measured in accordance with ASTM D-1238-04, condition 230°C/2.16 kg.

The molecular weight distributions for the polyethylene based resins can be determined with a chromatographic system consisting of either a Polymer Laboratories Model PL-210 or a Polymer Laboratories Model PL-220. The column and carousel compartments are operated at 140°C. The columns are three Polymer Laboratories 10-micron Mixed-B columns. The solvent is 1,2,4 trichlorobenzene. The samples are prepared at a concentration of 0.1 grams of polymer in 50 milliliters of solvent. The solvent used to prepare the samples contains 200 ppm of butylated hydroxytoluene (BHT). Samples are prepared by agitating lightly for 2 hours at 160°C. The injection volume is 100 microliters and the flow rate is 1.0 milliliters/minute.

A fifth-order polynomial fit of the calibration of the gel permeation chromatography (GPC) column set, is performed with 21 narrow molecular weight distribution polystyrene standards with molecular weights ranging from 580 to 8,400,000, arranged in 6 "cocktail" mixtures, with at least a decade of separation between individual molecular weights. The standards are purchased from Polymer Laboratories (UK). The polystyrene standards are prepared at 0.025 grams in 50 milliliters of solvent for molecular weights equal to, or greater than, 1,000,000, and at 0.05 grams in 50 milliliters of solvent for molecular weights less than 1,000,000. The polystyrene standards are dissolved at 80°C with gentle agitation for 30 minutes. The narrow standards mixtures are run first, and in order of decreasing highest molecular weight component, to minimize degradation. The polystyrene standard peak molecular weights are converted to polyethylene molecular weights using the following equation (as described in Williams and Ward, J. Polym. Sci., Polym. Let., 6, 621 (1968)):

$$M_{polyethylene} = A \times (M_{polystyrene})^B,$$

where M is the molecular weight, A has a value of 0.4315 and B is equal to 1.0. Polyethylene equivalent molecular weight calculations are performed using Viscotek TriSEC software Version 3.0. The molecular weights for polypropylene-based polymers can be determined using Mark-Houwink ratios according to ASTM D6474.9714-1, where, for polystyrene a = 0.702 and log K=-3.9, and for polypropylene, a = 0.725 and log K = -3.721. For polypropylene-based samples, the column and carousel compartments are operated at 160°C.

Differential Scanning Calorimetry (DSC) can be used to measure crystallinity in polyethylene (PE) based samples and polypropylene (PP) based samples. A sample is pressed into a thin film at a temperature of 190°C. About 5 to 8 mg of film sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (e.g., % cryst. = ($H_f$ / 292 J/g) x 100).

The melting point(s) (Tm) of the polymers can be determined from the second heat curve obtained from DSC, as described above. The crystallization temperature (Tc) can be determined from the first cooling curve.

Vicat softening temperatures are measured in accordance with ASTM D 1525-00.

The films and processes of this invention and their use are more fully described by the following examples. The following examples are provided for the purpose of illustrating the invention, and are not to be construed as limiting the scope of the invention.

EXPERIMENTAL

The following resins were used individually, or as a composition component, in the experimental compositions. These resins are preferably compounded with one or more stabilizers and/or antioxidants.

EAO-D20, a random, linear, low density ethylene-based copolymer, prepared using a Ziegler-Natta type catalyst and a solution polymerization process. This copolymer has a density of 0.920 g/cc (ASTM D792-00) and a melt index

($I_2$) of 1.0 g/10 min (190°C/2.16 kg, ASTM D1238-04). Comonomer = 1-octene.

EAO-E51 , an enhanced (composite) ethylene-based copolymers, with a density of 0.920 g/cc (ASTM D792-00) and a melt index ($I_2$) of 0.85 g/10 min (190°C/2.16 kg, ASTM D1238-04). Comonomer = 1-octene, DSC melting point of 124°C. Vicat softening point of 105°C (ASTM D1525-00).

EAO-B81 , an enhanced (composite) ethylene-based copolymers, with a density of 0.940 g/cc (ASTM D792-00) and a melt index ($I_2$) of 0.80 g/10 min (190°C/2.16 kg, ASTM D1238-04). Comonomer = 1-octene.

RESIN-D14, a random, propylene-based copolymer(s) resin system, with an overall density of 0.900 g/cc (ASTM D792-00) and a melt flow rate (MFR) of 0.50 g/10 min (230°C/2.16 kg, ASTM D1238-04). Comonomer = ethylene; percentage of comonomer around 8.5 wt%, DSC melting point of 164°C (ASTM D3417).

EAO-D62, a high density ethylene-based copolymer with a density of 0.953 g/cc (ASTM D792-00) and a melt index ($I_2$) of 0.3 g/10 min (190°C/2.16 kg, ASTM D1238-04). Comonomer = 1-hexene; percentage of comonomer = 0.7 wt%. Prepared in the gas phase using a chromium catalyst.

The following compositions were used to prepare films for testing.

Composition 1: 100 weight percent EAO-D20.
Composition 2: 100 weight percent EAO-E51.
Composition 3: 100 weight percent RESIN-D14.
Composition 4: 65 weight percent EAO-E51 and 35 weight percent RESIN-D14.
Composition 5: 100 weight percent EAO-B81.
Composition 6: 50 weight percent EAO-D62 and 50 weight percent EAO-E51.

The film fabrication conditions are shown in Table 1

Mechanical properties of the films are shown in Table 2.

Fabricated bags were formed from the following film composition: 62 weight percent EAO-E51, 34 weight percent of RESIN-D14 and 4 weight percent $TiO_2$ (pigment). The bags were perforated and tested for volumetric air permeability using the Haver & Boecker Bag Air Permeability Test. Perforation parameters and permeability test results are shown in Table 3. Several mechanical properties were also examined, as shown in Table 3.

As can be seen from the results in Table 3, Bag 3 has excellent permeability at lower perforation size and lower perforation area. The permeability of Bag 3 is comparable to Comparative Bag 2, which has much higher perforation sizes and total area. The permeability of Bag 3 is also significantly better than the permeability of Comparative Bag 1.

In addition, Bag 3 has better overall tear properties compared to Comparative Bag 2, and has comparable yield strengths. Thus, in Bag 3, there is no loss in mechanical properties, and even an improvement in overall tear, even though the hole density (holes/in$^2$) is at least quadrupled that of Comparative Bag 2

Table 1: Film Fabrication Conditions

| Measurement | Units | EAO-D20 | EAO-E51 | RESIN-D14 | 65% EAO/ 35% RESIN-D14 | EAO-B81 | 50% EAO-D62/ 50% EAO-E51 |
|---|---|---|---|---|---|---|---|
| Air Temp @ ring | °F | 47 | 46 | 47 | 46 | 46 | 47 |
| Amps | %FLC | 50.4 | 50.1 | 40.2 | 48.1 | 41.3 | 46.9 |
| Thickness | mil | 8.08 | 8.07 | 7.97 | 8.17 | 8.15 | 8.06 |
| B.U.R. | unitless | 2.1 | 2.1 | 2.1 | 2.1 | 2.1 | 2.1 |
| Die | in | 6 | 6 | 6 | 6 | 6 | 6 |
| Die gap | mil | 40 | 40 | 40 | 40 | 40 | 40 |
| Frost line height | in | 30 | 30 | 30 | 30 | 30 | 30 |
| Layflat | in | 20 | 20 | 20 | 20 | 20 | 20 |
| Line Speed | ft/min | 18.3 | 18.1 | 18.9 | 18.8 | 18 | 18.8 |
| Melt Pressure | psi | 5770 | 5800 | 4310 | 5020 | 4860 | 5420 |
| Melt Temp | °F | 456 | 454 | 497 | 464 | 439 | 449 |
| RPM | rpm | 64.4 | 63.8 | 112.2 | 83.6 | 73.6 | 68.1 |

(continued)

| Measurement | Units | EAO-D20 | EAO-E51 | RESIN-D14 | 65% EAO/ 35% RESIN-D14 | EAO-B81 | 50% EAO-D62/ 50% EAO-E51 |
|---|---|---|---|---|---|---|---|
| Rate | lb/hr | 141.8 | 140.7 | 141.9 | 141.5 | 142.7 | 143.6 |

Table 2: Mechanical Properties of Films

| Method | Property | Units | EAO-D20 | EAO-E51 | RESIN-D14 | 65% EAO-E51/ 35% RESIN-D14 | EAO-B81 | 2-Ply Porous Paper Bag | 50% EAO-D62/ 50% EAO-E51 |
|---|---|---|---|---|---|---|---|---|---|
| Tensile CD | %Elongation | % | 832.7 | 754.018 | 721.752 | 727.192 | 819.884 | 10.996 | 826.642 |
| Tensile CD | %Strain @ Yield | % | 14.64 | 16 | 8 | 15 | 12 | 11 | 12 |
| Tensile CD | Toughness | ft-lb/cc | 1801.004 | 1647 | 1890 | 1911 | 1987 | 41 | 2013 |
| Tensile CD | Thickness | mil | 7.16 | 7.67 | 7.77 | 7.12 | 6.98 | 4.18 | 7.04 |
| Tensile CD | Ultimate Tensile | psi | 5921.564 | 6486.808 | 4154.09 | 6386.778 | 5829.238 | 8100.83 | 5699.286 |
| Tensile CD | Yield Stress | psi | 1753.38 | 1691.52 | 4046.7 | 2389.7 | 3194.34 | 8100.84 | 2707.36 |
| Tensile MD | %Elongation | % | 802.002 | 701.3 | 234.61 | 745.858 | 782.28 | | 799.872 |
| Tensile MD | %Strain @ Yield | % | 23 | 20.86 | 7.62 | 14.14 | 12.04 | | 12.94 |
| Tensile MD | Toughness | ft-lb/cc | 1730.48 | 1528.71 | 636.94 | 2084.382 | 1899.26 | | 2016.716 |
| Tensile MD | Thickness | mil | 6.81 | 7.14 | 7.76 | 7.11 | 7.33 | | 7.29 |
| Tensile MD | Ultimate Tensile | psi | 5989.648 | 6107.166 | 4320.72 | 6751.54 | 5504.726 | | 5812.642 |
| Tensile MD | Yield Stress | psi | 1729.68 | 1684.76 | 4320.7 | 2594.84 | 3183.64 | | 2724.34 |
| Impact | Dart B | g | 637.5 | 1500 | 762.5 | 940 | 385 | 657.5 | 362.5 |
| Modulus | 2% Secant Modulus CD | psi | 32079.74 | 31998.3 | 1116074.1 | 53277.6 | 71722.84 | 155953.68 | 59782.02 |
| Modulus | 2% Secant MD | psi | 30188.76 | 38922.65 | 129537.28 | 60659.2 | 67686.16 | | 59660.7 |
| Tear | Elmendorf CD | g | 4279 | 3575 | 332.1 | 2155 | 969.4 | | 2917 |

(continued)

| Method | Property | Units | EAO-D20 | EAO-E51 | RESIN-D14 | 65% EAO-E51/ 35% RESIN-D14 | EAO-B81 | 2-Ply Porous Paper Bag | 50% EAO-D62/ 50% EAO-E51 |
|---|---|---|---|---|---|---|---|---|---|
| Tear | Elmendorf Tear MD | g | 3729 | 2922 | 248.6 | 1996 | 793.6 | 132 | 1474 |
| Tear | Norm. Elmendorf CD | g | 589.2 | 488 | 42.78 | 299.4 | 158 | | 403 |
| Tear | Norm. Elmendorf MD | g | 536.3 | 392.8 | 33.62 | 285.9 | 108.1 | 27.85 | 201.3 |

Table 3: Fabricated Bags: Perforation Parameters and Permeability and Mechanical Results

| Sample | Average Hole Diameter (microns) | Holes/in$^2$ | Estimated Hole Area per square inch of film (microns$^2$/inch$^2$) | Haver & Boecker Bag Air Permeability Test (m$^3$/hr) | CD Elmendorf Tear/mil ($\pm$ 1 st. dev.) (grams/mil) | MD Elmendorf Tear/mil ($\pm$ 1 st. dev.) (grams/mil) | CD Yield Strength (psi) | MD Yield Strength (psi) |
|---|---|---|---|---|---|---|---|---|
| 1 | 65 | 21 | 68,500 | 20 | 336 ($\pm$72) | 187 ($\pm$52) | 2,315 | 2,823 |
| 2 | 220 | 77 | 2,900,000 | >200 | 125 ($\pm$19) | 56 ($\pm$15) | 1,898 | 2,241 |
| 3 | 85 | 323 | 1,800,000 | >200 | 222 ($\pm$33) | 42 ($\pm$3) | 1,604 | 2,322 |

**Claims**

1. A perforated film, comprising at least one layer, and wherein the at least one layer comprises perforations that are individually of a size less than, or equal to, 90 microns ($\mu$m), and wherein the ratio of the total perforation area to the total film surface area is from 400,000 to 2,000,000 square micron per square inch of film (($\mu$m)$^2$/(in)$^2$) (62,000 to 310,000 (($\mu$m)$^2$/(cm)$^2$).

2. The film of Claim 1, wherein the perforations are of equal size.

3. The film of Claim 1, wherein the Gurley permeability is less than 50 sec per 100 cc air.

4. The film of Claim 1, wherein the sizes of the perforations range from 10 microns to 90 microns.

5. The film of Claim 1, wherein the ratio of the total perforation area to the total film surface area is from 500,000 to 1,000,000 square micron per square inch of film (($\mu$m)$^2$/(in)$^2$) (77,500 to 155,000 (($\mu$m)$^2$/(cm$^2$).

6. The film of Claim 1, wherein the film consists of one layer.

7. The film of Claim 1, wherein the film does not contain 50 weight percent of more of a filler.

8. The film of Claim 1, wherein the perforations are formed by a mechanical means or by a laser.

9. The film of Claim 1, wherein the at least one film layer is formed from a composition comprising at least one thermoplastic polymer.

10. The film of Claim 9, wherein the at least one thermoplastic polymer is a polyolefin.

11. The film of Claim 10, wherein the polymer composition comprises 50 weight percent or more of an ethylene-based homopolymer or interpolymer.

12. The film of Claim 11, wherein the polymer composition further comprises 40 weight percent or less of a propylene-based homopolymer or interpolymer.

13. The film of Claim 10, wherein the polyolefin is a propylene/$\alpha$-olefin interpolymer.

14. The film of Claim 10, wherein the polyolefin is an ethylene/$\alpha$-olefin interpolymer.

15. The film of Claim 14, wherein the ethylene/$\alpha$-olefin interpolymer comprises a copolymer formed from monomers selected from the group consisting of ethylene and 1-octene, ethylene and 1-butene, ethylene and 1-hexene, ethylene and 1-pentene, ethylene and 1-heptene, ethylene and propylene, ethylene and 4-methyl-1-pentene and mixtures thereof.

16. The film of Claim 15, wherein the ethylene/$\alpha$-olefin interpolymer has a melt index ($I_2$) from 0.1 g/10 min to 100 g/10 min.

17. The film of Claim 15, wherein the ethylene/$\alpha$-olefin interpolymer has a melt index from 0.2 to 50 grams/10 minutes, a density from 0.900 to 0.940 g/cc, and a molecular weight distribution, Mw/Mn, from 1.5 to 5.

18. The film of Claim 10, wherein the polyolefin is a propylene/ethylene interpolymer.

19. The film of Claim 18, wherein the propylene/ethylene interpolymer has a melt index ($I_2$) from 0.1 g/10 min to 100 g/10 min.

20. The film of Claim 19, wherein the propylene/ethylene interpolymer has a melt index from 0.1 to 50 grams/10 minutes, a density from 0.86 to 0.92 grams/cm$^3$, and a molecular weight distribution, Mw/Mn, from 2 to 10.

21. A package prepared from the film of Claim 1.

22. A method for forming a perforated film comprising at least one layer, said method comprising:

a) selecting a thermoplastic polymer or polymer blend suitable for the at least one layer;
b) forming a film from the thermoplastic polymer or polymer blend;
c) perforating said film to form a perforated film; and

wherein the at least one layer comprises perforations that are individually of a size less than, or equal to, 90 microns ($\mu$m), and wherein the ratio of the total perforation area to the total film surface area is from 400,000 to 2,000,000 square micron per square inch of film $((\mu m)^2/(in)^2)$ (62,000 to 310,000 $((\mu m)^2/(cm)^2)$.

23. A method of filling a package with powdery goods, said method comprising:

adding the powdered goods, using a pressurized gas, to a package of suitable capacity, to form a filled package, and
wherein the package is formed from a perforated film, comprising at least one layer, and wherein the at least one layer comprises perforations that are individually of a size less than, or equal to, 90 microns ($\mu$m), and wherein the ratio of the total perforation area to the total film surface area is from 400,000 to 2,000,000 square micron per square inch of film $((\mu m)^2/(in)^2)$ (62,000 to 310,000 $((\mu m)^2/(cm)^2)$.

24. The method of Claim 23, wherein the pressurized gas is air.

**Patentansprüche**

1. Eine perforierte Folie, beinhaltend mindestens eine Schicht, und wobei die mindestens eine Schicht Perforationen beinhaltet, die einzeln eine Größe von weniger als oder gleich 90 Mikrometer ($\mu$m) aufweisen, und wobei das Verhältnis der Gesamtfläche der Perforationen zu der Gesamtoberfläche der Folie 400 000 bis 2 000 000 Quadratmikrometer pro Quadratzoll Folie $((\mu m)^2/(in)^2)$ (62 000 bis 310 000 $((\mu m)^2/(cm)^2)$ beträgt.

2. Folie gemäß Anspruch 1, wobei die Perforationen von gleicher Größe sind.

3. Folie gemäß Anspruch 1, wobei die Gurley-Durchlässigkeit weniger als 50 s pro 100 cm$^3$ Luft beträgt.

4. Folie gemäß Anspruch 1, wobei die Größen der Perforationen im Bereich von 10 Mikrometer bis 90 Mikrometer liegen.

5. Folie gemäß Anspruch 1, wobei das Verhältnis der Gesamtfläche der Perforationen zu der Gesamtoberfläche der Folie 500 000 bis 1 000 000 Quadratmikrometer pro Quadratzoll Folie $((\mu m)^2/(in)^2)$ (77 500 bis 155 000 $((\mu m)^2/(cm)^2)$ beträgt.

6. Folie gemäß Anspruch 1, wobei die Folie aus einer Schicht besteht.

7. Folie gemäß Anspruch 1, wobei die Folie nicht 50 Gewichtsprozent oder mehr eines Füllstoffs enthält.

8. Folie gemäß Anspruch 1, wobei die Perforationen durch ein mechanisches Mittel oder durch einen Laser gebildet werden.

9. Folie gemäß Anspruch 1, wobei die mindestens eine Folienschicht aus einer Zusammensetzung, beinhaltend mindestens ein thermoplastisches Polymer, gebildet ist.

10. Folie gemäß Anspruch 9, wobei das mindestens eine thermoplastische Polymer ein Polyolefin ist.

11. Folie gemäß Anspruch 10, wobei die Polymerzusammensetzung 50 Gewichtsprozent oder mehr eines Homopolymers oder Interpolymers auf Ethylenbasis beinhaltet.

12. Folie gemäß Anspruch 11, wobei die Polymerzusammensetzung ferner 40 Gewichtsprozent oder weniger eines Homopolymers oder Interpolymers auf Propylenbasis beinhaltet.

13. Folie gemäß Anspruch 10, wobei das Polyolefin ein Propylen/$\alpha$-Olefin-Interpolymer ist.

14. Folie gemäß Anspruch 10, wobei das Polyolefin ein Ethylen/$\alpha$-Olefin-Interpolymer ist.

**15.** Folie gemäß Anspruch 14, wobei das Ethylen/$\alpha$-Olefin-Interpolymer ein Copolymer beinhaltet, das aus Monomeren gebildet ist, die ausgewählt sind aus der Gruppe, bestehend aus Ethylen und 1-Octen, Ethylen und 1-Buten, Ethylen und 1-Hexen, Ethylen und 1-Penten, Ethylen und 1-Hepten, Ethylen und Propylen, Ethylen und 4-Methyl-1-penten und Mischungen davon.

**16.** Folie gemäß Anspruch 15, wobei das Ethylen/$\alpha$-Olefin-Interpolymer einen Schmelzindex ($I_2$) von 0,1 g/10 min bis 100 g/10 min aufweist.

**17.** Folie gemäß Anspruch 15, wobei das Ethylen/$\alpha$-Olefin-Interpolymer einen Schmelzindex von 0,2 bis 50 Gramm/10 Minuten, eine Dichte von 0,900 bis 0,940 g/cm$^3$ und eine Molekulargewichtsverteilung, Mw/Mn, von 1,5 bis 5 aufweist.

**18.** Folie gemäß Anspruch 10, wobei das Polyolefin ein Propylen/Ethyleninterpolymer ist.

**19.** Folie gemäß Anspruch 18, wobei das Propylen/Ethyleninterpolymer einen Schmelzindex ($I_2$) von 0,1 g/10 min bis 100 g/10 min aufweist.

**20.** Folie gemäß Anspruch 19, wobei das Propylen/Ethyleninterpolymer einen Schmelzindex von 0,1 bis 50 Gramm/10 Minuten, eine Dichte von 0,86 bis 0,92 Gramm/cm$^3$ und eine Molekulargewichtsverteilung, Mw/Mn, von 2 bis 10 aufweist.

**21.** Eine Verpackung, die aus der Folie gemäß Anspruch 1 hergestellt ist.

**22.** Ein Verfahren zum Bilden einer perforierten Folie, beinhaltend mindestens eine Schicht, wobei das Verfahren Folgendes beinhaltet:

a) Auswählen eines thermoplastischen Polymers oder einer thermoplastischen Polymermischung, das/die für die mindestens eine Schicht geeignet ist;
b) Bilden einer Folie aus dem thermoplastischen Polymer oder der thermoplastischen Polymermischung;
c) Perforieren der Folie, um eine perforierte Folie zu bilden; und

wobei die mindestens eine Schicht Perforationen beinhaltet, die einzeln eine Größe von weniger als oder gleich 90 Mikrometer ($\mu$m) aufweisen, und wobei das Verhältnis der Gesamtfläche der Perforationen zu der Gesamtoberfläche der Folie 400 000 bis 2 000 000 Quadratmikrometer pro Quadratzoll Folie (($\mu$m)$^2$/(in)$^2$) (62 000 bis 310 000 (($\mu$m)$^2$/(cm)$^2$) beträgt.

**23.** Ein Verfahren zum Füllen einer Verpackung mit pulverförmigen Waren, wobei das Verfahren Folgendes beinhaltet:

Zugeben der pulverförmigen Waren, unter Verwendung von Druckgas, zu einer Verpackung mit geeigneter Kapazität, um eine gefüllte Verpackung zu bilden, und
wobei die Verpackung aus einer perforierten Folie gebildet ist, beinhaltend mindestens eine Schicht, und wobei die mindestens eine Schicht Perforationen beinhaltet, die einzeln eine Größe von weniger als oder gleich 90 Mikrometer ($\mu$m) aufweisen, und wobei das Verhältnis der Gesamtfläche der Perforationen zu der Gesamtoberfläche der Folie 400 000 bis 2 000 000 Quadratmikrometer pro Quadratzoll Folie (($\mu$m)$^2$/(in)$^2$) (62 000 bis 310 000 (($\mu$m)$^2$/(cm)$^2$) beträgt.

**24.** Verfahren gemäß Anspruch 23, wobei das Druckgas Luft ist.

**Revendications**

**1.** Un film perforé, comprenant au moins une couche, et où l'au moins une couche comprend des perforations qui sont individuellement d'une taille inférieure, ou égale, à 90 microns ($\mu$m), et où le rapport de l'aire de perforation totale à l'aire de surface de film totale va de 400 000 à 2 000 000 microns carrés par pouce carré de film (($\mu$m)$^2$/(po)$^2$) (62 000 à 310 000 (($\mu$m)$^2$/(cm)$^2$).

**2.** Le film de la revendication 1, où les perforations sont de taille égale.

**3.** Le film de la revendication 1, où la perméabilité Gurley est inférieure à 50 sec pour 100 cm$^3$ d'air.

**4.** Le film de la revendication 1, où les tailles des perforations sont comprises dans la gamme allant de 10 microns à 90 microns.

**5.** Le film de la revendication 1, où le rapport de l'aire de perforation totale à l'aire de surface de film totale va de 500 000 à 1 000 000 microns carrés par pouce carré de film $((\mu m)^2/(po)^2)$ (77 500 à 155 000 $((\mu m)^2/(cm)^2)$.

**6.** Le film de la revendication 1, où le film est constitué d'une couche.

**7.** Le film de la revendication 1, où le film ne contient pas 50 pour cent en poids ou plus d'une charge.

**8.** Le film de la revendication 1, où les perforations sont formées par un moyen mécanique ou par un laser.

**9.** Le film de la revendication 1, où l'au moins une couche de film est formée à partir d'une composition comprenant au moins un polymère thermoplastique.

**10.** Le film de la revendication 9, où l'au moins un polymère thermoplastique est une polyoléfine.

**11.** Le film de la revendication 10, où la composition de polymère comprend 50 pour cent en poids ou plus d'un homopolymère ou interpolymère à base d'éthylène.

**12.** Le film de la revendication 11, où la composition de polymère comprend en sus 40 pour cent en poids ou moins d'un homopolymère ou interpolymère à base de propylène.

**13.** Le film de la revendication 10, où la polyoléfine est un interpolymère de propylène/$\alpha$-oléfine.

**14.** Le film de la revendication 10, où la polyoléfine est un interpolymère d'éthylène/$\alpha$-oléfine.

**15.** Le film de la revendication 14, où l'interpolymère d'éthylène/$\alpha$-oléfine comprend un copolymère formé à partir de monomères sélectionnés dans le groupe constitué d'éthylène et de 1-octène, d'éthylène et de 1-butène, d'éthylène et de 1-hexène, d'éthylène et de 1-pentène, d'éthylène et de 1-heptène, d'éthylène et de propylène, d'éthylène et de 4-méthyl-1-pentène, et de mélanges de ceux-ci.

**16.** Le film de la revendication 15, où l'interpolymère d'éthylène/$\alpha$-oléfine a un indice de fluidité à chaud ($I_2$) allant de 0,1 g/10 min à 100 g/10 min.

**17.** Le film de la revendication 15, où l'interpolymère d'éthylène/$\alpha$-oléfine a un indice de fluidité à chaud allant de 0,2 à 50 grammes/10 minutes, une masse volumique allant de 0,900 à 0,940 g/cm$^3$, et une distribution des masses moléculaires, Mw/Mn, allant de 1,5 à 5.

**18.** Le film de la revendication 10, où la polyoléfine est un interpolymère de propylène/éthylène.

**19.** Le film de la revendication 18, où l'interpolymère de propylène/éthylène a un indice de fluidité à chaud ($I_2$) allant de 0,1 g/10 min à 100 g/10 min.

**20.** Le film de la revendication 19, où l'interpolymère de propylène/éthylène a un indice de fluidité à chaud allant de 0,1 à 50 grammes/10 minutes, une masse volumique allant de 0,86 à 0,92 grammes/cm$^3$, et une distribution des masses moléculaires, Mw/Mn, allant de 2 à 10.

**21.** Un conditionnement préparé à partir du film de la revendication 1.

**22.** Une méthode pour former un film perforé comprenant au moins une couche, ladite méthode comprenant :

a) la sélection d'un polymère ou mélange de polymères thermoplastique adéquat pour l'au moins une couche ;
b) la formation d'un film à partir du polymère ou mélange de polymères thermoplastique ;
c) la perforation dudit film afin de former un film perforé ; et

où l'au moins une couche comprend des perforations qui sont individuellement d'une taille inférieure, ou égale, à 90 microns ($\mu m$), et où le rapport de l'aire de perforation totale à l'aire de surface de film totale va de 400 000 à 2 000 000 microns carrés par pouce carré de film $((\mu m)^2/(po)^2)$ (62 000 à 310 000 $((\mu m)^2/(cm)^2)$.

**23.** Une méthode de remplissage d'un conditionnement avec des produits en poudre, ladite méthode comprenant :

l'ajout des produits en poudre, à l'aide d'un gaz sous pression, dans un conditionnement d'une capacité adéquate, afin de former un conditionnement rempli, et
où le conditionnement est formé à partir d'un film perforé, comprenant au moins une couche, et où l'au moins une couche comprend des perforations qui sont individuellement d'une taille inférieure, ou égale, à 90 microns $(\mu m)$, et où le rapport de l'aire de perforation totale à l'aire de surface de film totale va de 400 000 à 2 000 000 microns carrés par pouce carré de film $((\mu m)^2/(po)^2)$ (62 000 à 310 000 $((\mu m)^2/(cm)^2)$.

**24.** La méthode de la revendication 23, où le gaz sous pression est de l'air.

FIG. 1

EP 1 965 971 B1

# FIG. 2

1 unit

1.5 units

2 units

# FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3085608 A
- US 4672684 A
- EP 0391661 A
- US 4743123 A
- US 4332845 A
- GB 1265547 A
- US 5493844 A
- US 4456570 A
- US 4579154 A
- US 20030085213 A
- US 5427807 A
- US 6086967 A
- US 5389448 A
- US 6579607 B
- US 5139855 A
- EP 0060599 A
- EP 0500931 A1
- WO 03074594 A
- WO 03095197 A
- US 3645992 A
- US 5272236 A
- US 5278272 A
- US 6054544 A
- US 6335410 A
- US 6723810 A
- US 4076698 A, Anderson
- US 4798081 A
- US 5008204 A
- US 5703187 A
- US 545403 A
- EP 416815 A
- US 5872201 A
- US 702475 A
- EP 514828 A
- US 6118013 A
- US 5470993 A
- US 5374696 A

- US 5231106 A
- US 5055438 A
- US 5057475 A
- US 5096867 A
- US 5064802 A
- US 5132380 A
- US 720041 A
- US 5453410 A
- US 4339507 A
- US 5844045 A, Kolthammer
- US 5869575 A
- US 6448341 A
- US 6593005 B
- US 6939919 B
- EP 1263873 A
- US 3893989 A
- US 4113802 A
- US 3456044 A, Pahlke
- US 4352849 A, Mueller
- US 4820557 A
- US 4837084 A, Warren
- US 4865902 A, Golike
- US 4927708 A, Herran
- US 4952451 A, Mueller
- US 4963419 A
- US 5059481 A, Lustig
- US 5288531 A, Falla
- US 5721025 A, Falla
- US 5360648 A, Falla
- US 6117465 A, Falla
- US 6723398 B, Chum
- US 4927888 A, Strait
- US 4950541 A, Tabor
- US 4762890 A, Strait
- US 5346963 A, Hughes
- US 4684576 A, Tabor

**Non-patent literature cited in the description**

- **WILD et al.** *Journal of Polymer Science, Poly. Phys. Ed.,* 1982, vol. 20, 441
- **E. P. MOORE, JR.** Polypropylene Handbook. Hanser Publishers, 1996, 220
- **KIRK-OTHMER.** The Encyclopedia of Chemical Technology. John Wiley & Sons, 1981, vol. 16, 416-417

- THE ENCYCLOPEDIA OF CHEMICAL TECHNOLOGY. vol. 18, 191-192
- Packaging Machinery Operation. **C. GLENN DAVIS.** Form-Fill-Sealing. Packaging Machinery Manufacturers Institute, 2006
- The Wiley Encyclopedia of Packaging Technology. John Wiley & Sons, 364-369

• **KENTON R. OSBOM ; WILMER A JENKENS.** Plastic Films, Technology and Packaging Applications. Technomic Publishing Co., Inc, 1992, 39-105

• **WILLIAMS ; WARD.** *J. Polym. Sci., Polym. Let.,* 1968, vol. 6, 621